# EUROPÄISCHE PATENTSCHRIFT

(11) **EP 4 336 098 B1**
(45) Veröffentlichungstag und Bekanntmachung des Hinweises auf die Patenterteilung: **29.01.2025**
(21) Anmeldenummer: 24154000.4
(22) Anmeldetag: 09.08.2017
(51) Int. Cl.: F21V 8/00, F21Y 103/33, F21W 131/406, F21Y 105/12, F21Y 113/10, F21Y 115/10

(54) **SCHEINWERFER**
HEADLIGHT
PROJECTEUR

(30) Priorität: 09.08.2016 DE 102016114694
(43) Veröffentlichungstag der Anmeldung: 13.03.2024
(62) Teilanmeldung aus: 17751080.7
(73) Patentinhaber: Arnold & Richter Cine Technik GmbH & Co. Betriebs KG, 80807 München (DE)
(72) Erfinder: MUSCHAWECK, Julius, 82131 Gauting (DE)
(74) Vertreter: Isarpatent

(56) Entgegenhaltungen:
- EP-A1- 2 320 125
- WO-A2-2007/000212
- WO-A2-2012/024607
- US-A1- 2014 218 916

## Beschreibung

### TECHNISCHES GEBIET

Die vorliegende Schrift betrifft Ausführungsformen eines Scheinwerfers zur Beleuchtung einer Film-, Studio-, Bühnen-, Event- und/oder Theaterumgebung.

### HINTERGRUND

Für die Beleuchtung einer Film-, Studio-, Bühnen-, Event- und/oder Theaterumgebung werden üblicherweise Scheinwerfer eingesetzt. Mitunter ist es wünschenswert, dass ein eine Lichtquellenanordnung umfassender Scheinwerfer eine ausreichende Lichtausbeute bereitstellt und weiteren Anforderungen, wie sie für eine Film-, Studio-, Bühnen-, Event- und/oder Theaterumgebung üblich sind, genügt. Derartige Anforderungen umfassen beispielsweise einen Dauerbetrieb über mehrere Stunden, einen weiten Verstellbereich eines Streuwinkels, ein homogenes, weich auslaufendes Lichtfeld, und/oder in einer sog. Flood-Einstellung eine harte Lichtquelle sowie in einer sog. Spot-Einstellung eine weiche Lichtquelle.

Die WO 2017/000212 A2 beschreibt einen Scheinwerfer aufweisend eine Mehrzahl Lichtleiter mit Einspeisestellen, die außerhalb eines Reflektorinnenraums angeordnet sind, und mit Lichtausgabestellen, die innerhalb des Reflektorinnenraums angeordnet sind. Vergleichbare Konfigurationen sind aus der EP 2 320 125 A1 sowie der WO 2012/024607 A2 bekannt.

### BESCHREIBUNG

Die Erfindung ist durch den unabhängigen Anspruch 1 definiert. Merkmale einiger Ausführungsformen sind in den Unteransprüchen angegeben. Zum Beispiel umfasst ein Scheinwerfer zur Beleuchtung einer Film-, Studio-, Bühnen-, Event- und/oder Theaterumgebung: eine Reflektoranordnung mit einer reflektierenden Innenoberfläche, die einen Reflektorinnenraum begrenzt; und eine Anzahl passiver Lichtleiter mit Einspeisestellen, die außerhalb des Reflektorinnenraums angeordnet sind, und mit Lichtausgabestellen, die innerhalb des Reflektorinnenraums angeordnet sind. Der Scheinwerfer umfasst eine außerhalb des Reflektorinnenraums angeordnete, elektrisch betriebene Lichtquellenanordnung, die einen Träger aufweist, an dessen Frontseite erste LEDs einer erste Farbe und zweite LEDs einer zweiten Farbe montiert sind, welche jeweils dazu ausgebildet sind, Licht zu erzeugen und es an den Einspeisestellen der passiven Lichtleiter einzuspeisen. Die Frontseite weist ein Strukturmuster auf, das aus einer Vielzahl gleich großer und aneinander angrenzender Hexagonalzellen gebildet ist, und jede LED der ersten und zweiten LED ist in einer separaten Hexagonalzelle angeordnet. Jeder der passiven Lichtleiter kann z.B. in Lichtführungsrichtung eine durch einen Abstand zwischen der jeweiligen Einspeisestelle und der jeweiligen Lichtausgabestelle definierte Längserstreckung aufweisen, die wenigstens um ein Vielfaches größer ist als eine Quererstreckung senkrecht zur Lichtführungsrichtung.

Die Reflektoranordnung kann ein gewölbter Reflektor sein. Die Reflektoranordnung wird nachstehend gelegentlich auch einfach als "Reflektor" bezeichnet.

Weiter können die Lichtleiter jeweils stabförmig ausgebildet sein. Die Lichtleiter können die Innenoberfläche der Reflektoranordnung durchdringen. Zum Beispiel sind die passiven Lichtleiter radialsymmetrisch angeordnet und weisen sternförmig auf denselben Punkt des Reflektorinnenraums. Bei einer Ausführungsform sind die passiven Lichtleiter entlang eines fiktiven Kreises angeordnet und die Längserstreckungen sind jeweils senkrecht zum Umfangsverlauf des fiktiven Kreises ausgerichtet.

Die Anzahl der passiven Lichtleiter kann ungerade sein und die Lichtleiter können in einem konstanten Winkelabstand zueinander angeordnet sein.

Es liegt außerdem im Rahmen der Erfindung, dass die Lichtausgabestellen konzentrisch zur Innenoberfläche der Reflektoranordnung angeordnet sind.

Die passiven Lichtleiter können jeweils einen mehreckigen Querschnitt aufweisen.

Zum Beispiel sind die passiven Lichtleiter jeweils aus einem Glasmaterial geformt. Weiter können die passiven Lichtleiter jeweils als Total-Internal-Reflection-Lichtleiter ausgebildet sein.

Die reflektierende Innenoberfläche der Reflektoranordnung kann nach Art eines in Richtung des Lichtaustritts im Durchmesser wachsenden Kegelstumpfes oder Paraboloid-ähnlich geformt sein.

Bei einer Ausführungsform sind die Lichtausgabestellen der passiven Lichtleiter durch eine im Wesentlichen ebene Lichtleiterabschlussfläche gebildet, deren Flächennormale in einem Winkel von weniger als 30° zur Längserstreckung des jeweiligen Lichtleiters ausgerichtet ist.

Die Reflektoranordnung kann außerdem einen Träger aufweisen, der die reflektierende Innenoberfläche ausbildet oder trägt, wobei die Lichtquellenanordnung vollständig außerhalb des Trägers angeordnet ist.

Im Reflektorinnenraum kann eine Linsenanordnung mit wenigstens zwei konzentrisch zueinander ausgerichteten Linsenelementen, die jeweils eine Wellenstruktur aufweisen, angeordnet sein. Die Linsenelemente können als Streulinsen ausgebildet sein, und die Wellenstruktur kann an den innenliegenden Oberflächen der Streulinsen vorhanden sein. Die Linsenanordnung kann ausgebildet sein, einen Abstrahlwinkel des Scheinwerfers zu vergrößern.

Weiter kann einen Vorreflektor installiert sein, der zwischen den Lichtausgabestellen der passiven Lichtleiter und dem Grund der Reflektoranordnung angeordnet ist.

Weitere Beispiele für mögliche Ausführungsformen des Scheinwerfers folgen nun. Die nachstehenden Merkmale des Scheinwerfers sind allesamt optional; sie können jedoch zur Ausbildung weitere Ausführungsbeispiele miteinander kombiniert werden, sofern nichts gegenteiliges beschrieben ist.

Die LEDs oder Teilgruppen davon sind über eine Anzahl von Strompfaden elektrisch miteinander verbunden sind.

Die Strompfade sind ebenfalls an der Frontseite des Trägers angeordnet.

Die Strompfade weisen jeweils einen keilförmigen Verlauf auf, dessen Spitze im Wesentlichen in ein Zentrum der Frontseite weist.

Die ersten LEDs und die zweiten LEDs sind bezogen auf einen Mittelpunkt der Frontseite jeweils symmetrisch verteilt.

Das Strukturmuster mit den Hexagonalzellen füllt die Frontseite vollständig aus und jede von wenigstens 90% der Hexagonalzellen ist mit einer einzigen der LEDs besetzt.

Jede Hexagonalzelle weist eine Fläche von weniger als 6 mm² auf.

Ein geometrischer Mittelpunkt der Verteilung der ersten LEDs und ein geometrischer Mittelpunkt der Verteilung der zweiten LEDs fallen mit dem Mittelpunkt der Frontseite zusammen.

Der Träger umfasst ein Single-Layer-PCB, das ausgebildet ist, jeder LED einen elektrischen Strom zuzuführen.

Für die ersten LEDs ist im Träger wenigstens ein erster Strompfad vorgesehen. Für die zweiten LEDs ist im Träger wenigstens ein zweiter Strompfad vorgesehen. Der wenigstens eine erste Strompfad und der wenigstens eine zweite Strompfad kreuzen sich in keiner Ebene des Trägers.

Der Scheinwerfer umfasst eine an den Träger gekoppelte Flüssigkeitskühlung, die ausgebildet ist, eine von den LEDs produzierte Verlustwärme abzuführen.

Die Flüssigkeitskühlung weist auf: eine Zuleitung, die Flüssigkeit zu einer zentralen Stelle einer Rückseite des Trägers hinführt; und eine Ableitung, die Flüssigkeit von der zentralen Stelle in Richtung eines Randgebiets des Trägers abführt.

Der Scheinwerfer umfasst weiter: eine Primärlinsenanordnung, die in einem Abstand zwischen 50 µm und 1 mm zu den LEDs positioniert ist, wobei die Primärlinsenanordnung für jede der LEDs wenigstens ein Linsenelement umfasst.

Die Linsenelemente der Primärlinsenanordnung sind aus Pressglas, Kunststoff oder Silikon gefertigt.

Die Primärlinsenanordnung ist in Gestalt einer Silicone-on-Glass-Konstruktion ausgebildet.

Die Primärlinsenanordnung ist ausgebildet, mindestens 70% des von den LEDs erzeugten Lichts in einem Lichtkegel mit einem Öffnungswinkel von kleiner als 35° auszugeben.

Die Linsenelemente sind auf der Frontseite des Trägers abgewandten Frontseite eines Trägers der Primärlinsenanordnung montiert, wobei die Frontseite der Stütze ein Strukturmuster aufweist, das aus einer Vielzahl gleich großer und einander angrenzenden Hexagonalzellen gebildet ist; jedes der Linsenelemente in einer separaten Hexagonalzelle angeordnet ist.

Der Abstand kann durch einen Luftspalt gebildet sein.

Weitere Merkmale und Vorteile werden dem Fachmann in Anbetracht des Studiums der nachfolgenden detaillierten Beschreibung sowie des Sichtens der begleitenden Zeichnungen deutlich.

### KURZE BESCHREIBUNG DER ZEICHNUNGEN

Die in den Figuren gezeigten Teile sind nicht notwendigerweise maßstabsgetreu; vielmehr liegt die Betonung in dem Darstellen von Prinzipien der Erfindung. Ferner bezeichnen in den Figuren gleich Bezugszeichen einander entsprechende Teile. In den Figuren zeigen:

- Fig. 1A: schematisch einen Ausschnitt einer Aufsicht einer Lichtquellenanordnung gemäß einer oder mehreren Ausführungsformen;
- Fig. 1B: schematisch einen Ausschnitt einer Aufsicht auf eine hexagonale Parkettierung gemäß einer oder mehreren Ausführungsformen;
- Fig. 2: schematisch einen Ausschnitt eines vertikalen Querschnitts einer Lichtquellenanordnung gemäß einer oder mehreren Ausführungsformen;
- Fig.3: schematisch einen Ausschnitt einer perspektivischen Ansicht einer Lichtquellenanordnung gemäß einer oder mehreren Ausführungsformen;
- Fig.4: schematisch einen Ausschnitt eines vertikalen Querschnitts einer Lichtquellenanordnung gemäß einer oder mehreren Ausführungsformen;
- Fig. 5: schematisch anhand von Graphen eine Übertragungsfunktion einer Primärlinsenanordnung einer Lichtquellenanordnung gemäß einer oder mehreren Ausführungsformen;
- Fig. 6: schematisch einen Ausschnitt einer perspektivischen Ansicht eines Scheinwerfers gemäß einer oder mehreren Ausführungsformen;
- Fig. 7: schematisch einen Ausschnitt einer Aufsicht eines Scheinwerfers gemäß einer oder mehreren Ausführungsformen;
- Fig. 8: schematisch einen Ausschnitt einer Seitenansicht eines Scheinwerfers gemäß einer oder mehreren Ausführungsformen;
- Fig. 9: schematisch einen Ausschnitt einer Seitenansicht eines passiven Lichtleiters eines Scheinwerfers gemäß einer oder mehreren Ausführungsformen;
- Fig. 10-11: jeweils schematisch einen Ausschnitt eines vertikalen Querschnitts eines passiven Lichtleiters eines Scheinwerfers gemäß einer oder mehreren Ausführungsformen;
- Fig. 12: schematisch einen Ausschnitt einer perspektivischen Ansicht eines Scheinwerfers gemäß einer oder mehreren Ausführungsformen;
- Fig. 13: schematisch einen Ausschnitt einer Aufsicht eines Scheinwerfers gemäß einer oder mehreren Ausführungsformen;
- Fig. 14: schematisch einen Ausschnitt einer perspektivischen Ansicht eines Scheinwerfers gemäß einer oder mehreren Ausführungsformen;
- Fig. 15: schematisch einen Ausschnitt eines vertikalen Querschnitts eines Scheinwerfers gemäß einer oder mehreren Ausführungsformen;
- Fig. 16: schematisch einen Ausschnitt einer Aufsicht einer Kondensoranordnung eines Scheinwerfers gemäß einer oder mehreren Ausführungsformen;
- Fig. 17-23: jeweils schematisch einen Ausschnitt eines vertikalen Querschnitts eines Scheinwerfers gemäß einer oder mehreren Ausführungsformen;
- Fig. 24-25: jeweils schematisch einen Ausschnitt eines vertikalen Querschnitts einer Mischröhre eines Scheinwerfers gemäß einer oder mehreren Ausführungsformen; und
- Fig. 26: schematisch einen Ausschnitt eines vertikalen Querschnitts eines Scheinwerfers gemäß einer oder mehreren Ausführungsformen.

### DETAILLIERTE BESCHREIBUNG

In der folgenden detaillierten Beschreibung wird auf die begleitenden Zeichnungen Bezug genommen, die dazugehören und in denen durch die Veranschaulichung spezifischer Ausführungsformen gezeigt wird, wie die Erfindung in die Praxis umgesetzt werden kann.

In diesem Zusammenhang kann richtungsangebende Terminologie, wie beispielsweise "ober-", "unter-", "rück-", "vorder-", "hinter-", "nachgelagert", "vorgelagert" etc., mit Bezug auf die Ausrichtung der Figuren, die beschrieben werden, verwendet werden. Da Teile von Ausführungsformen in einer Reihe von unterschiedlichen Ausrichtungen positioniert sein können, kann die richtungsangebende Terminologie zu Zwecken der Veranschaulichung verwendet werden und ist keinesfalls einschränkend. Es wird darauf hingewiesen, dass andere Ausführungsformen angewandt werden können und strukturelle oder logische Veränderungen ausgeführt werden können, ohne vom Schutzumfang der vorliegenden Erfindung abzuweichen. Die folgende detaillierte Beschreibung ist daher nicht in einem einschränkenden Sinn zu verstehen, und der Schutzumfang der vorliegenden Erfindung ist durch die angefügten Ansprüche definiert.

Bezug wird nunmehr im Detail auf verschiedene Ausführungsformen, auf ein oder mehrere Beispiele, die in den Figuren veranschaulicht sind, genommen. Jedes Beispiel wird in erläuternder Art und Weise präsentiert und ist nicht als eine Einschränkung der Erfindung zu deuten. Beispielsweise können veranschaulichte oder als Teil einer Ausführungsform beschriebene Merkmale auf oder im Zusammenhang mit anderen Ausführungsformen angewandt werden, um noch eine weitere Ausführungsform hervorzubringen. Dass die vorliegende Erfindung derartige Modifizierungen und Variationen umfasst, ist beabsichtigt. Die Beispiele werden unter Anwendung einer spezifischen Sprache beschrieben, die nicht als den Schutzumfang der angefügten Ansprüche einschränkend ausgelegt werden sollte. Die Zeichnungen sind keine maßstabgetreue Wiedergabe und dienen lediglich der Veranschaulichung. Zum besseren Verständnis sind, wenn nicht anders angegeben, dieselben Elemente durch dieselben Referenzen in den verschiedenen Zeichnungen gekennzeichnet worden.

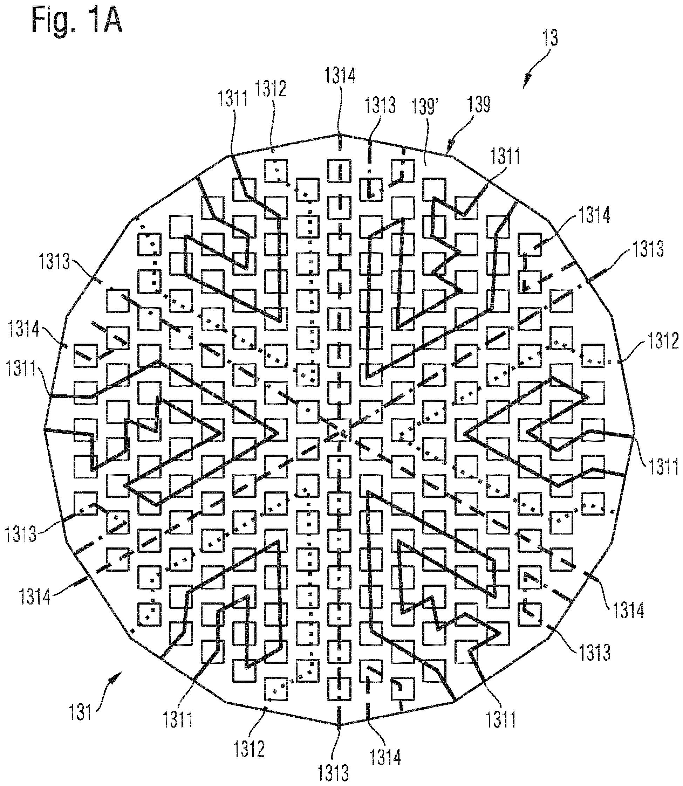

In der Fig. 1A ist eine schematische Aufsicht eine Lichtquellenanordnung 13 gezeigt. Wie an späteren Stellen näher ausgeführt werden wird, kann die Lichtquellenanordnung 13 dazu ausgebildet sein, zur Ausbildung eines Scheinwerfers 1 zur Beleuchtung einer Film-, Studio-, Bühnen-, Event- und/oder Theaterumgebung eingesetzt zu werden.

Die Lichtquellenanordnung 13 umfasst einen Träger, der eine Frontseite 1391 aufweist. Beispielsweise hat die Frontseite 1391 einen polygonalen Umfangsverlauf, der beispielsweise nahezu kreisförmig sein kann. Bei anderen Ausführungsformen können auch andere Frontseitenformen implementiert sein, beispielsweise eine rein kreisförmige oder eine rechteckige Frontseitenform.

Beispielsweise hat die Frontseite 1391 eine Fläche von mindestens 40 Quadratmillimetern. Die Frontseite 1391 kann planar ausgestaltet sein, womit besagte Fläche in einer Ebene liegen kann.

Auf der Frontseite 1391 des Trägers 139 sind eine Vielzahl LEDs 131 montiert. Alle LEDs 131 können eine identische Abmessung aufweisen und beispielsweise eine Grundfläche, z.B. eine lichtemittierende Fläche von etwa 1 mm² haben.

Die LEDs 131 können LEDs einer ersten Farbe, im Folgenden als erste LEDs 1311 bezeichnet, LEDs einer zweiten Farbe, im Folgenden als zweite LEDs 1312 bezeichnet, LEDs einer dritten Farbe, im Folgenden als dritte LEDs 1313 bezeichnet, und/oder LEDs einer vierten Farbe umfassen, im Folgenden als vierte LEDs 1314 bezeichnet. Beispielsweise sind bei einer Ausführung nur erste und zweite LEDs 1311, 1312 vorgesehen, weitere Ausführungsformen können zusätzlich dritte LEDs 1313 umfassen, und noch weitere Ausführungsformen, wie in der Fig. 1A gezeigt, können zusätzlich besagte vierte LEDs 1314 umfassen. Auch können weitere LEDs anderer Farben als die erste Farbe, die zweite Farbe, die dritte Farbe, und die vierte Farbe vorgesehen werden. Somit könnten beispielsweise auch fünf oder sechs oder noch mehr Fahren vorgesehen sein.

Beispielsweise sind die LEDs 131 in ihrer Gemeinsamkeit ausgebildet, ein RGB (Rot-Grün-Blau)- oder ein RGBW (Rot-Grün-Blau-Weiß)- Farbmuster zu erzeugen.

Bei einer beispielhaften Ausführungsform weisen die ersten LEDs 1311 die Farbe "weiß" auf. Die zweiten LEDs 1112 können die Farbe "grün" aufweisen, und die dritten LEDs 1313 können die Farbe "blau" aufweisen, und die vierten LEDs 1314 können die Farbe "rot" aufweisen. Somit können die LEDs 131 beispielsweise RGBW-Farbmuster erzeugen.

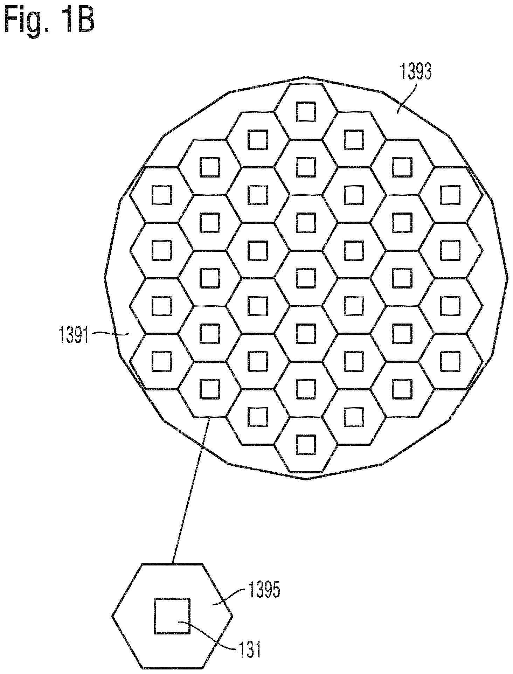

Die Frontseite 1391 des Trägers 139 weist ein Strukturmuster auf, das aus einer Vielzahl gleich großer und einander angrenzenden Hexagonalzellen gebildet ist. Ein derartiges Strukturmuster ist exemplarisch in der Fig. 1A als auch in der Fig. 1B gezeigt. Jede der Hexagonalzellen 1395 kann einen sechseckigen Umfangsverlauf aufweisen. Dabei können alle sechs Seiten gleich lang sein und darüber hinaus können auch alle Winkel gleich groß sein. Bei anderen Ausführungsformen können sich die Seitenlängen unterscheiden. Beispielsweise ist die Frontseite 1391 des Trägers 139 lückenlos mit dem Strukturmuster, also lückenlos - abgesehen von einem Randgebiet - mit den Hexagonalzellen 1395 ausgefüllt. Diese lückenlose Ausfüllung kann auch als Parkettierung bezeichnet werden. Das Strukturmuster der Frontseite 1391 kann eine hexagonale Parkettierung sein. Beispielsweise hat eine einzelne Hexagonalzelle 1395 in der hexagonalen Parkettierung nur Nachbarn, die über vollständige Kanten verbunden sind, aber keine, die nur über Ecken oder Kantenteile verbunden sind, wie in der Fig. 1B veranschaulicht.

Nach einer Ausführungsform ist jede der LEDs 131 in einer separaten Hexagonalzelle vorgesehen, wie es in den Fig. 1A-B schematisch gezeigt. Das Strukturmuster mit den Hexagonalzellen kann die Frontseite 1391 vollständig oder nahezu vollständig ausfüllen, und jede von wenigstens 90% der Hexagonalzellen kann mit einer einzigen der LEDs 131 besetzt sein. Dieser Anteil kann auch höher sein als 90%, beispielsweise liegt er bei 95% oder sogar bei mindestens 98%. Nicht besetzte Hexagonalzellen können beispielsweise für die Anordnung einer mechanischen Stütze und/oder zur Verlegung von Stromleitungen, beispielsweise Leiterbahnen, genutzt werden.

Ferner können die LEDs 131 bezogen auf den Mittelpunkt der Frontseite 1391 symmetrisch verteilt sein, was im Folgenden anhand der beispielhaften Darstellung in der Fig. 1A erläutert werden soll, wo besagte erste LEDs 1311, zweite LEDs 1312, dritte LEDs 1313 und vierte LEDs 1314 vorgesehen sind.

Beispielsweise sind die ersten LEDs 1311 entlang der durchzogenen Linie angeordnet. Die zweiten LEDs 1312 können entlang der gepunkteten Linie angeordnet sein, und die dritten LEDs 1313 können entlang der abwechselnd gepunkteten gestrichelten Linie angeordnet sein, und schließlich können die vierten LEDs 1114 entlang der gestrichelten Linie angeordnet sein.

Entlang besagter Linien können Strompfade ausgebildet sein, die die betreffenden LEDs mit Strom versorgen. Die LEDs 131 oder Teilgruppen können also über eine Anzahl von Strompfaden elektrisch miteinander verbunden sein, wobei die Strompfade ebenfalls an der Frontseite 1391 des Trägers 139 angeordnet sein können. Wie in Fig. 1A veranschaulicht, können die Strompfade jeweils einen keilförmigen Verlauf aufweisen, dessen Spitze im Wesentlichen in ein Zentrum der Frontseite weist. Einige Spitzen weisen direkt in das Zentrum, wohingegen andere Spitzen nicht genau in die Mitte der Frontseite 139 weisen, sondern leicht daneben, was beispielsweise aufgrund der hexagonalen Paketierung bedingt ist. Daher wird die Formulierung "im Wesentlichen in ein Zentrum" verwendet.

Wie weiter in der Fig. 1A veranschaulicht ist, können die Strompfade so verlegt sein, dass sie sich in keiner Ebene des Trägers kreuzen.

Die symmetrische Verteilung kann außerdem derart ausgestaltet sein, dass die unterschiedlichen LEDs ihren geometrischen Schwerpunkt jeweils am Mittelpunkt der Frontseite 1391 haben. Zum Beispiel fallen ein geometrischer Mittelpunkt der Verteilung der ersten LEDs 1311 und ein geometrischer Mittelpunkt der Verteilung der zweiten LEDs 1312 mit dem Mittelpunkt der Frontseite 1391 zusammenfallen. Auch ein geometrischer Mittelpunkt der Verteilung der dritten LEDs 1313 und ein geometrischer Mittelpunkt der Verteilung der vierten LEDs 1314 können mit dem Mittelpunkt der Frontseite 1391 zusammenfallen.

Ferner können die LEDs 131, beispielsweise die ersten LEDs 1311, die zweiten LEDs 1312, die dritten LEDs 1313 und/oder die vierten LEDs 1314 jeweils einen gleich großen mittleren Abstand zum Mittelpunkt der Frontseite 1191 aufweisen, wie dies in der Fig. 1A dargestellt ist.

Beispielsweise weist jede Hexagonalzelle 1395 eine Fläche von weniger als 6 mm² auf. In einer Ausführungsform beträgt der Füllfaktor, beispielsweise definiert durch die gesamte lichtemittierende Fläche der LEDs 131 pro Fläche der Frontseite 1391, wenigstens 15%.

Der Träger 139 kann ein Single-Layer-PCB umfassen, das ausgebildet ist, jeder der LEDs 131 einen elektrischen Strom zuzuführen, beispielsweise mittels besagter Strompfade. Der Träger 139 kann auch als ein Single-Layer-PCB ausgebildet sein. Die oben beschriebene Anordnung der LEDs 131 kann derart erfolgen, dass sich die Strompfade für die ersten LEDs 1111, die zweiten LEDs 1312, und die dritten LEDs 1313 sowie die vierten LEDs 1314 in keiner Ebene des Trägers 139 kreuzen. Beispielsweise verlaufen die vier unterschiedlichen Strompfade entlang der in der Fig. 1A gezeigten durchgezogene Linie (für die ersten LEDs 1311), der gepunkteten Linie (für die zweiten LEDs 1312), entlang der abwechselnd gestrichelt gepunkteten Linie (für die dritten LEDs 1313), und entlang der gestrichelten Linie (für die vierten LEDs 1314). Somit kann nach einer Ausführungsform auf sogenannte Multi-Layer PCB verzichtet werden. Alle Strompfade können besagten keilförmigen Verlauf aufweisen, dessen Spitze in das Zentrum des Trägers 139 weist.

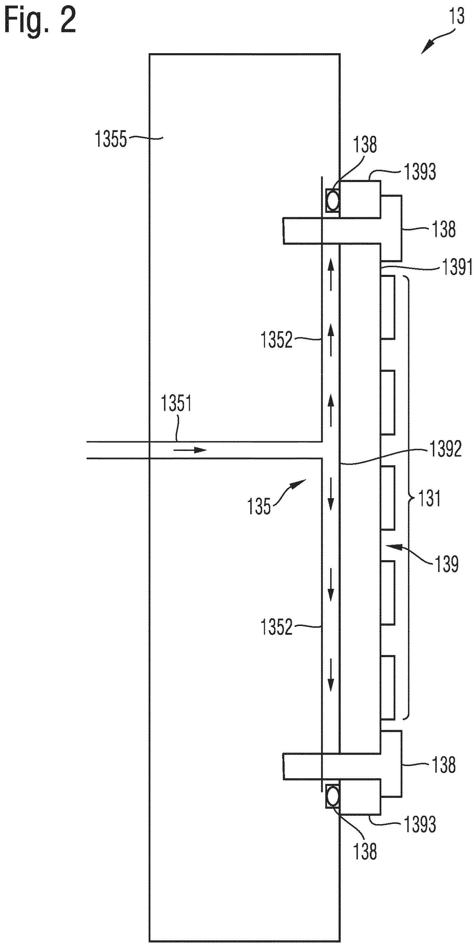

Fig. 2 veranschaulicht anhand eines vertikalen Querschnitts ein weiteres optionales Merkmal, wonach die Lichtquellenanordnung 13, die beispielsweise entsprechend einer oder mehreren der oben beschriebenen Ausführungsformen ausgestaltet sein kann, insbesondere also die hexagonale Parkettierung (s. Fig. 1B) und/oder die symmetrische Verteilung der unterschiedlichen LEDs 131 aufweisen kann, eine an den Träger 139 gekoppelte Flüssigkeitskühlung 135 aufweisen, die ausgebildet ist, eine von den LEDs 131 produzierte Verlustwärme abzuführen.

Die Flüssigkeitskühlung 135 kann in einer Halterung 1155 angeordnet sein, die beispielsweise über ein oder mehrere Befestigungselemente 138 an einer Rückseite 1192 des Trägers 139 befestigt sein kann.

Die Flüssigkeitskühlung 135 kann zum Beispiel an der Rückseite 1392 des Trägers 139 angeschlossen sein. Nach einer Ausführungsform weist die Flüssigkeitskühlung 135 eine Zuleitung 1351 auf, die Flüssigkeit zu einer zentralen Stelle der Rückseite 1392, beispielsweise gegenüberliegend zum besagten Mittelpunkt der Frontseite 1391, hinführt. Mit anderen Worten kann die zentrale Stelle ein Mittelpunkt der Rückseite 1392 sein. Ferner kann die Flüssigkeitskühlung 135 eine Ableitung 1352 umfassen, die Flüssigkeit von der zentralen Stelle in Richtung des Randgebiets 1393 des Trägers 139 abführt. Weist der Träger 139 beispielsweise einen etwa kreisförmigen Querschnitt auf, so kann die Zuleitung 1351 im Wesentlichen senkrecht auf den zentralen Punkt zu laufen, der dem Mittelpunkt der Frontseite 1391 gegenüberliegt, zu welchen die LEDs 131 symmetrisch angeordnet sein können. An dieser Stelle kann die Zuleitung 1351 in die Ableitung 1352 übergehen, die die Flüssigkeit dann beispielsweise in radialer Richtung hin zum Randgebiet 1393 führt. Auf diese Art und Weise kann eine im Wesentlichen homogene Temperaturverteilung auf dem Träger 139 sichergestellt werden. Beispielsweise wird an der zentralen Stelle die meiste Verlustwärme produziert, sodass es zweckmäßig sein kann, an dieser Stelle die kühlste Flüssigkeit zuzuführen, und diese sodann in radialer Richtung, also beispielsweise in Richtung eines neg. Temperaturgradienten, abzuführen.

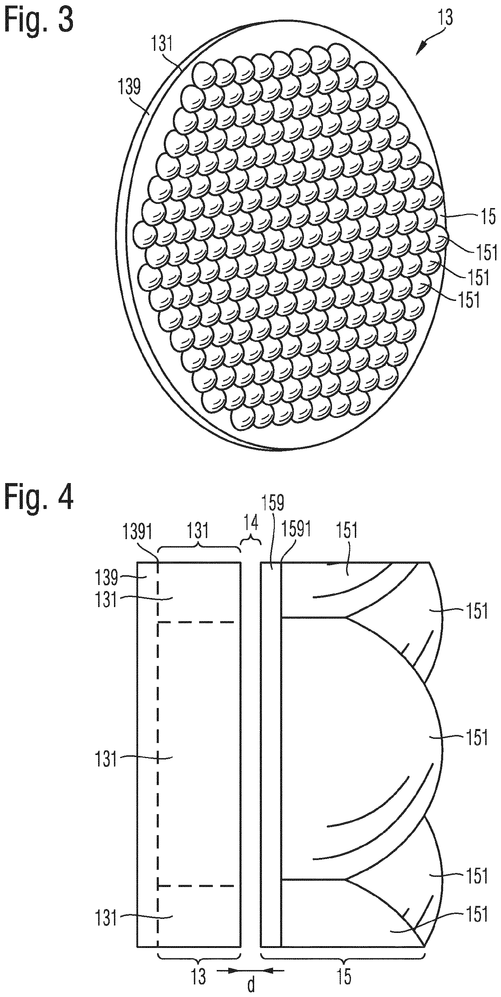

Mit Bezug auf die Fig. 3 bis 5 soll ein weiteres optionales Merkmal der Lichtquellenanordnung 13 erläutert werden. Demnach kann die Lichtquellenanordnung 13, die beispielsweise entsprechend einer der vorstehend beschriebenen Ausführungsformen ausgestaltet sein kann, beispielsweise was das Design der Frontseite 1391 des Trägers 139, die Anordnung der LEDs 131 und/oder die Abfuhr der Verlustleistung anbelangt, eine Primärlinsenanordnung 15 aufweisen, die in einem Abstand zwischen 50 µm und 1 mm zu den LEDs 131 positioniert ist, wobei die Primärlinsenanordnung 15 für jede der LEDs 131 wenigstens ein Linsenelement 151 umfasst.

Beispielsweise sind die LEDs 131 auf dem Träger 139 nicht mit einer Linse versehen. Nach einer Ausführungsform befinden sich die LEDs 131 also nicht in Kontakt mit den Linsenelemente 151, wie dies beispielsweise bei den bekannten TIR-Linsen, die unmittelbar auf die LEDs aufmontiert werden können oder über diese gestülpt werden können, der Fall ist. Hier können die LEDs 131 vollständig örtlich getrennt von den Linsenelementen 151 angeordnet sein, beispielsweise derart, dass es keinen örtlichen Überlappungsbereich zwischen den LEDs 131 und den Linsenelemente 151 gibt.

Der Träger 139 kann im Wesentlichen dieselbe Fläche aufweisen wie ein Träger 159 der Primärlinsenanordnung 15, wie in den Fig. 3 und 4 veranschaulicht ist. Weist die Frontseite 1391 des Trägers 139 beispielsweise ein Strukturmuster mit einer hexagonalen Parkettierung auf, so kann für jede Hexagonalzelle 1395 mindestens ein Linsenelement 151 vorgesehen sein. In der Fig. 4 sind die LEDs 131 nur schematisch dargestellt und es versteht sich, dass die LEDs 131 nicht notwendigerweise unmittelbar aneinander angrenzen müssen. Eine Frontseite 1591 des Trägers 159 der Primärlinsenanordnung 15 kann ebenfalls ein Strukturmuster mit einer hexagonalen Parkettierung aufweisen, wobei in jeder Hexagonalzelle des Strukturmusters der Frontseite 1591 ein Linsenelement 151 vorgesehen sein kann.

Der Abstand d zwischen der Primärlinsenanordnung 15 und den LEDs 131 liegt beispielsweise parallel zur Lichtaustrittsrichtung des Lichts der LEDs 131. Er kann durch eine Luftspalt 14 gebildet sein. Die Linsenelemente 151 weisen beispielsweise jeweils eine identische Form auf, die zum Beispiel auf einer Lichtaustrittsseite halbkugelförmig oder asphärisch ist. Eine Gesamterstreckung der Linsenelemente 151 parallel zur Normalen der Frontseite 1591 liegt beispielsweise im Bereich von 1 mm bis 4 mm.

Die Linsenelemente 151 der Primärlinsenanordnung 15 können aus Pressglas, Kunststoff oder Silikon gefertigt sein. Nach einer Ausführungsform ist die Primärlinsenanordnung 15 in Gestalt einer Silicone-on-Glass-Konstruktion ausgebildet. Beispielsweise kann der Träger 159 aus Glas gefertigt sein, wohingegen die Linsenelemente 151 aus Silikon sein können.

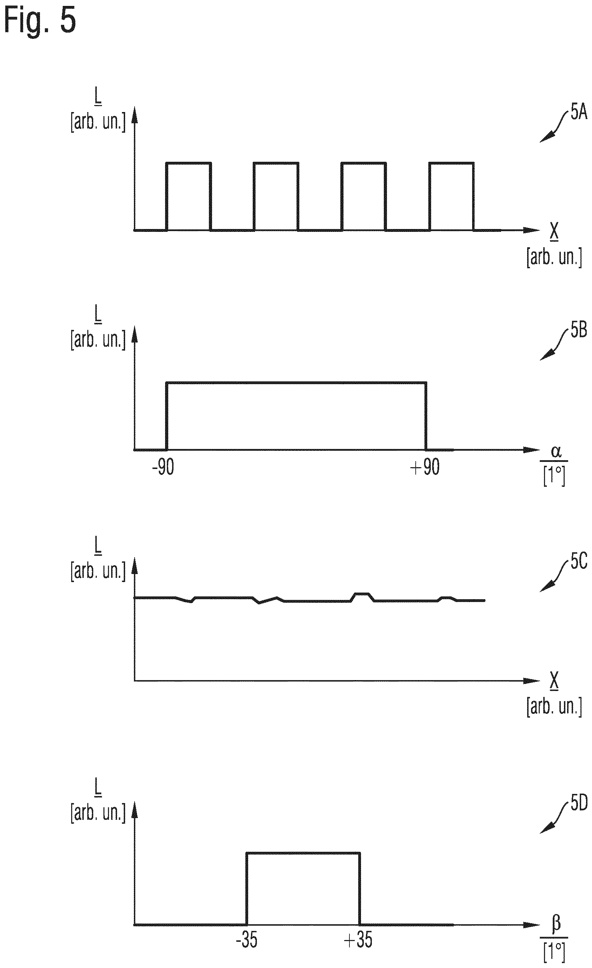

Der Graph 5A in der Fig. 5 zeigt die Leuchtdichte L in einer beliebigen Einheit (arbitrary unit - kurz: arb. un.) über den Ort X, ebenfalls in einer beliebigen Einheit, wie sie nach einer Ausführungsform von den LEDs 131 produziert werden kann. Aufgrund eines Abstands der LEDs 131 zueinander kann sich ein pulsartiger, also nicht unterbrechungsfreier Verlauf über den Ort X ergeben, wie durch den Graphen 5A veranschaulicht. Ohne weitere optische Verarbeitung wäre die von den LEDs 131 produzierte Leuchtdichte L nach einer Ausführungsform über den Winkelbereich α zwischen -90° und +90° im Wesentlichen konstant, wie durch den Graphen 5B veranschaulicht.

Durch die im Abstand d zu den LEDs 131 angeordnete Primärlinsenanordnung 15 kann die örtliche Verteilung der Leuchtdichte L homogenisiert werden (s. Graph 5C) und das Licht in einem Lichtkegel mit einem kleineren Öffnungswinkel β, der beispielsweise kleiner ist als 35°, ausgegeben werden (s. Graph 5D).

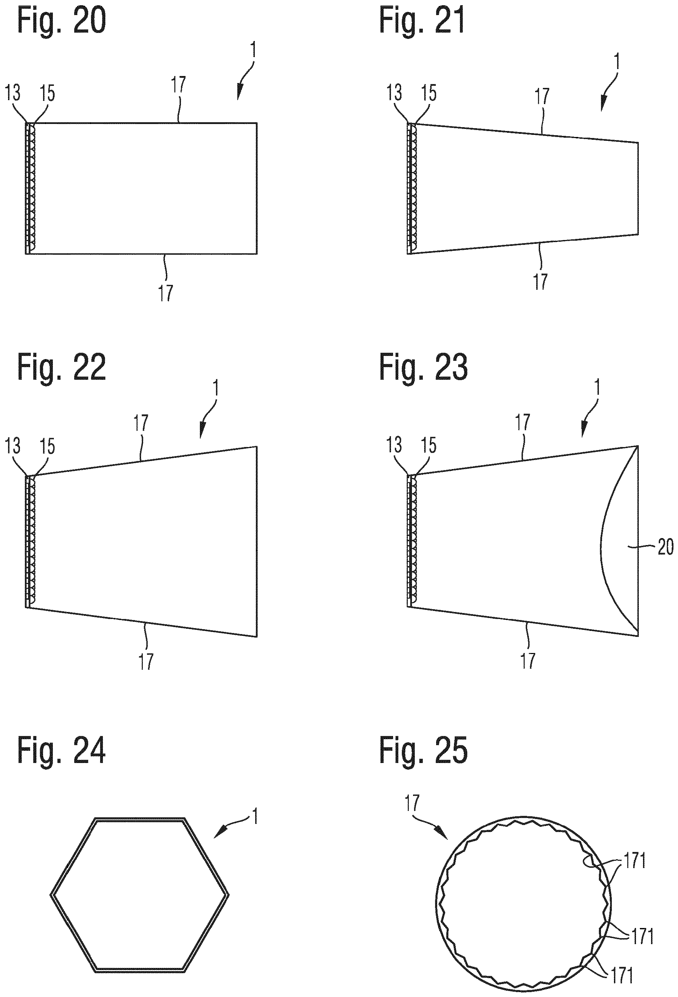

Gemäß einem anderen Aspekt kann der Primärlinsenanordnung 15 eine Lichtmischröhre 17 nach gelagert sein, was mit Bezug auf die Fig. 20 bis 22 noch näher ausgeführt werden wird.

Nach einer Ausführungsform ist die Lichtquellenanordnung 13 ausgebildet, bei einer Leistung von mindestens 400 W betrieben zu werden und Licht in einer Stärke von mindestens 25 Tausend Lumen (25 klm) auszugeben. Gleichzeitig kann der Durchmesser des Trägers 139 kleiner als 50 mm sein.

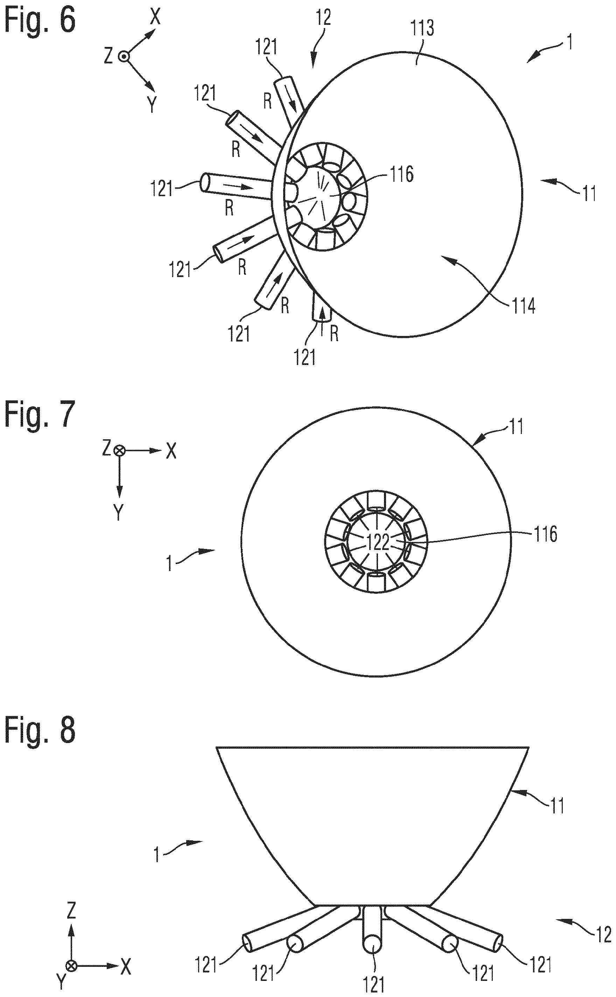

Die Lichtquellenanordnung 13 mit der Primärlinsenanordnung kann eine Plattform für viele verschiedene Scheinwerferarten bilden, wie nachstehend demonstriert werden wird. Insbesondere kann die Lichtquellenanordnung 13 oder mehrere Ausführungen davon dazu verwendet werden, um einen Scheinwerfer gemäß den Fig. 6 bis 14 auszubilden.

Die Figuren 6 bis 8 zeigen verschiedene Ansichten eines Scheinwerfers 1 zur Beleuchtung einer Film-, Studio-, Bühnen-, Event- und/oder Theaterumgebung. Der Scheinwerfer 1 umfasst eine Reflektoranordnung 11, die mit einer reflektierenden Innenoberfläche 113 einen Reflektorinnenraum 114 begrenzt. Zu der Reflektoranordnung 11 kann auch ein Vorreflektor 116 gehören, der ebenfalls zu der Innenoberfläche 113 beitragen kann, was weiter unten näher ausgeführt werden wird. Nachstehend wird die Reflektoranordnung 11 auch schlicht als "Reflektor" 11 bezeichnet werden.

Die reflektierende Innenoberfläche 113 des Reflektors 11 kann nach Art eines in Richtung des Lichtaustritts im Durchmesser wachsenden Kegelstumpfes oder Paraboloid-ähnlich geformt sein. Der Reflektor 11 gibt das Licht etwa in Z-Richtung aus, die senkrecht zu einer XY-Ebene liegen kann. Die Reflektoranordnung 11 kann also ein gewölbter Reflektor sein.

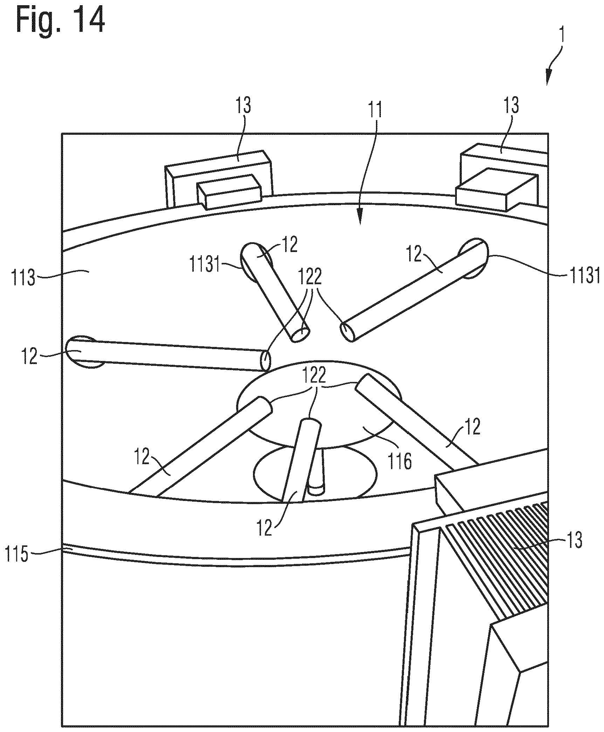

Weiter sind passive Lichtleiter 12 vorgesehen, die Einspeisestellen 121 aufweisen. Diese Einspeisestellen 121 sind außerhalb des Reflektorinnenraums 114 angeordnet. Die Lichtleiter 12 weisen außerdem Lichtausgabestellen 122 auf, die innerhalb des Reflektorinnenraums 114 angeordnet sind. Die Lichtleiter 12 können also die Innenoberfläche 113 der Reflektoranordnung 11 durchdringen (wie in der Fig. 14 gezeigt, anders bei den Ausführungsbeispielen gemäß Fig. 6-8 und 12; allerdings kann es vorteilhaft sein, dass auch bei den letztgenannten Ausführungsbeispielen die Lichtleiter 12 entgegen der schematischen Darstellung den Reflektor durchdringen, wie z.B. in Fig. 14 veranschaulicht). Die passiven Lichtleiter 12 können in Lichtführungsrichtung R eine durch einen Abstand zwischen der jeweiligen Einspeisestelle 121 und der jeweiligen Lichtausgabestelle 122 definierte Längserstreckung aufweisen, die wenigstens um ein Vielfaches größer ist als eine Quererstreckung senkrecht zur Lichtführungsrichtung R. Die Lichtleiter 12 können z.B. stabförmig ausgebildet sein.

Außerhalb des Reflektorinnenraums 114 ist eine elektrisch betriebene Lichtquellenanordnung angeordnet, die ausgebildet ist, Licht zu erzeugen und es an den Einspeisestellen 121 der passiven Lichtleiter 12 einzuspeisen. Beispielsweise ist die Lichtquellenanordnung des Scheinwerfers 1 gemäß einer oder mehreren der oben beschriebenen Ausführungsformen der Lichtquellenanordnung 13 ausgebildet. Beispielsweise ist an jeder Lichteinspeisestelle 121 eine derartige Lichtquellenanordnung 13 vorgesehen (s. auch Fig. 14).

Die passiven Lichtleiter 12 können radialsymmetrisch angeordnet sein und sternförmig auf denselben Punkt des Reflektorinnenraums 114 weisen. Die passiven Lichtleiter 12 können entlang eines fiktiven Kreises angeordnet sein und die Längserstreckungen können jeweils senkrecht zum Umfangsverlauf des fiktiven Kreises ausgerichtet sein. Ferner kann - entgegen der der beispielhaften Darstellung in den Figuren 6-8, 12 und 14 - die Anzahl der passiven Lichtleiter 12 ungerade sein. Beispielsweise beträgt die Anzahl 3, 5, 7, 9, 11, 13 oder 15. Es können auch mehr als 15 Lichtleiter 12 vorgesehen sein. Die passiven Lichtleiter 12 können in einem konstanten Winkelabstand zueinander angeordnet sein. Wie oben beschrieben worden ist, kann die reflektierende Innenoberfläche 113 des Reflektors 11 nach Art eines in Richtung des Lichtaustritts im Durchmesser wachsenden Zylinders geformt sein. Die Lichtausgabestellen 122 der Lichtleiter 12 können konzentrisch zur Innenoberfläche 113 des Reflektors 11 angeordnet sein.

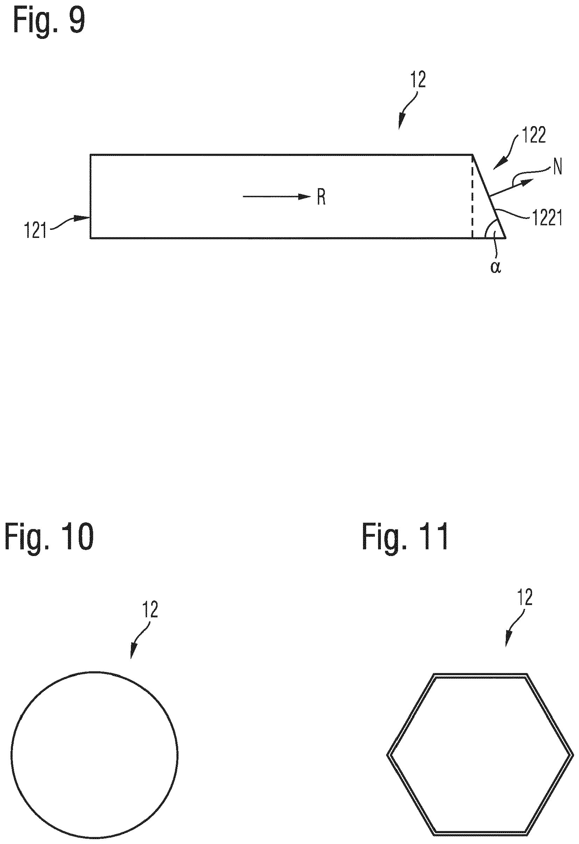

Fig. 9 zeigt eine Seitenansicht eines Lichtleiters 12 und die Fig. 10 und 11 zeigen verschiedene Querschnitte eines Lichtleiters 12. Der Lichtleiter 12 kann ausgebildet sein, das an der Lichteinspeisestelle 121 eingekoppelte Licht in Führungsrichtung R bis zur Lichtausgabestelle 122 zu führen. Weiter kann der Lichtleiter 12 ausgebildet sein, dass an der Lichteinspeisestelle 121 eingekoppelte Licht zu mischen, sodass beispielsweise gemischtes Licht an der Lichtausgabestelle 122 austritt.

Der Lichtleiter 12 kann als Total-Internal-Reflection (TIR) Lichtleiter ausgebildet sein. Danach tritt kein oder nur ein insignifikanter Anteil des Lichts entlang der Längserstreckung des Lichtleiters 12 in radialer Richtung aus. Die Lichtausgabestelle 122 des passiven Lichtleiters 12 kann durch eine im Wesentlichen ebene Lichtleiterabschlussfläche 1221 gebildet sein, deren Flächennormale N in einem Winkel von weniger als 30° zur Längserstreckung des jeweiligen Lichtleiters 12 ausgerichtet sein kann. Jener Winkel ist darüber hinaus bei manchen Ausführungsformen größer als 5°. Mit anderen Worten ist bei manchen Ausführungsformen die Lichtleiterabschlussfläche 1221 nicht senkrecht zur Längserstreckung des Lichtleiters 12, sondern schräg hierzu angeordnet.

Der Lichtleiter 12 kann aus einem Glasmaterial geformt sein. Der Lichtleiter 12 kann eine im Wesentlichen zylinderartige Form aufweisen, beispielsweise einen nahezu kreisförmigen Querschnitt aufweisen, wie es in der Fig. 10 veranschaulicht ist. Bei anderen Ausführungsformen weist der Lichtleiter 12 einen mehreckigen Querschnitt, beispielsweise einen hexagonalen Querschnitt, auf, wie es in der Fig. 11 veranschaulicht ist. Beispielsweise bleibt der Querschnitt hinsichtlich seiner Fläche und hinsichtlich seiner Form über wenigstens 95% der Längserstreckung des Lichtleiters 12 konstant.

Die Querschnittsfläche des Lichtleiters 12 kann an die Lichtquellenanordnung 13 angepasst sein. Ist die Lichtquellenanordnung 13 beispielsweise entsprechend einer der oben beschriebenen Ausführungsformen ausgestaltet, so beträgt die senkrecht zur Lichtführungsrichtung R liegende Querschnittsfläche des Lichtleiters 12 beispielsweise der Fläche der Frontseite 1391 des Trägers 139 der Lichtquelle 13 multipliziert mit einem Faktor von 0,9 bis 1,5. Dieser Faktor kann in Abhängigkeit eines Abstands zwischen der Lichtquelle 13 und dem Lichtleiter 12 variieren.

Sämtliche, beim Scheinwerfer 1 vorgesehene Lichtleiter können identisch ausgebildet sein, beispielsweise wie es in den vorstehenden Absätzen beschrieben ist.

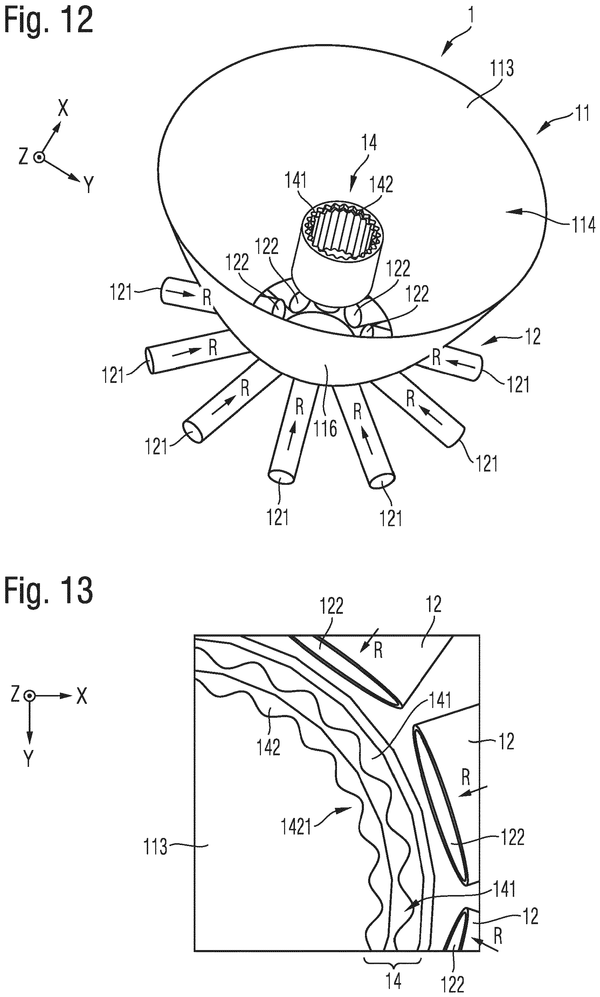

Nach dem Ausführungsbeispiel gemäß den Fig. 12 und 13 kann der Scheinwerfer 1 zusätzlich eine im Reflektorinnenraum 114 angeordnete Linsenanordnung 14 umfassen, die zwei konzentrisch zueinander ausgerichtete Streulinsenelemente 141, 142 aufweist, deren innenliegenden Oberflächen 1411, 1421 jeweils eine Wellenstruktur aufweisen. Die Linsenanordnung 14 dient beispielsweise dazu, die Lichtquelle virtuell zu vergrößern und so einen größeren Abstrahlwinkel des Scheinwerfers zu erzeugen, beispielsweise zur Erzielung oder Umsetzung einer Zoom-Funktion. Hierzu können die beiden Linsenelemente 141, 142 beweglich zueinander angeordnet sein, sodass der relevante Abstand zwischen dem Linsenelement 141 und dem Linsenelement 142 verändert werden kann. Beispielsweise ist nur eines der beiden Linsenelemente 141, 142 beweglich angeordnet, oder beide Linsenelemente 141, 142 sind beweglich zueinander angeordnet.

Schließlich veranschaulicht die Fig. 14 eine weitere Ausführungsform des Scheinwerfers 1, wonach die Reflektoranordnung 11 einen Träger 115 aufweist, der die reflektierende Innenoberfläche 113 ausbildet oder trägt. Dabei kann die Lichtquellenanordnung 13 vollständig außerhalb des Trägers 115 angeordnet sein. Bei dem Beispiel gemäß der Fig. 14 ist für jeden Lichtleiter 12 eine separate Lichtquellenanordnung 13 vorgesehen. Aufgrund der Anordnung der Lichtquellenanordnungen 13 außerhalb des Trägers 115 bestehen hinsichtlich der Dimensionierung der Lichtquellenanordnungen 13 keine Vorgaben, die sich aufgrund der Größe des Reflektorinnenraums 114 ergeben würden. Die Innenoberfläche 113 kann Aussparungen 1131 aufweisen, durch die die Lichtleiter 12 hindurch treten können, sodass das Licht an den Lichtausgabestellen 122 dem Reflektor 11 bzw. dem Vorreflektor 116 zugeführt werden kann.

Die Lichtquellenanordnungen 13 für den Scheinwerfer 1 gemäß einer oder mehreren der Ausführungsformen nach den Fig. 6 bis 14 kann ausgestaltet sein, wie es mit Bezug auf die Fig. 1 bis 5 weiter oben erläutert worden ist. Demnach kann eine jeweilige Lichtquellenanordnung 13 insbesondere den Träger 139 mit einer auf der Frontseite 1391 befindlichen hexagonalen Parkettierung und den LEDs 131 aufweisen, die entsprechend der oben beschriebenen Ausführungsformen bezogen auf den Mittelpunkt der Frontseite 1391 symmetrisch verteilt sein können. Ferner kann bei jeder Lichtquellenanordnung 13 eine dieser nachgeschalteten Primärlinsenanordnung 15 nach einer der oben beschriebenen Ausführungsformen vorgesehen sein. Das Licht, das von dieser Primärlinsenanordnung 15 ausgekoppelt wird, kann dann der Lichteinspeisestelle 121 eines jeweiligen Lichtleiters 12 zugeführt werden. Außerdem kann entgegen der schematischen Darstellung der Fig. 14 anstelle einer Luftkühlung mittels Kühllamellen besagte Flüssigkeitskühlung 135 vorgesehen sein.

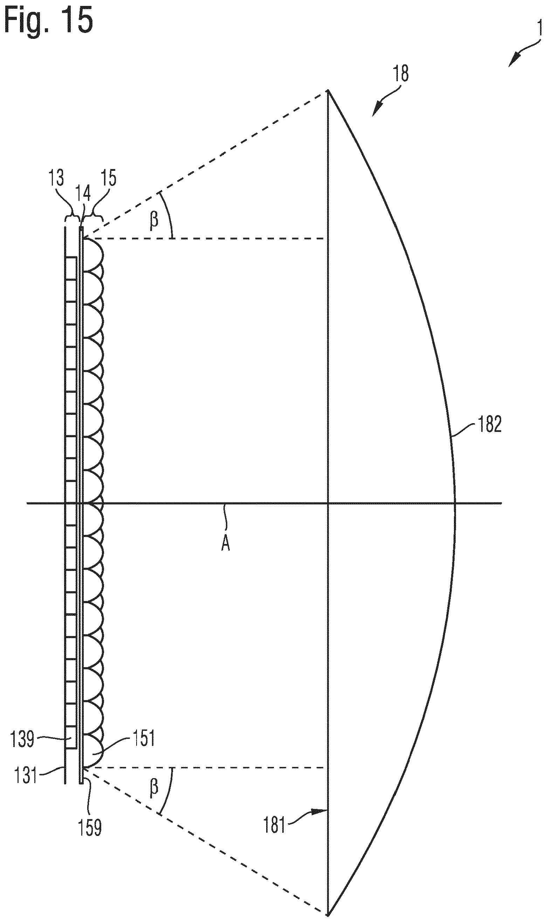

Mit Bezug auf die Fig. 15 bis 18 wird eine weitere Ausführungsform eines Scheinwerfers 1 gemäß einem anderen Aspekt der Erfindung erläutert. Der dort dargestellte Scheinwerfer 1 kann eine Lichtquellenanordnung 13 mit einer Primärlinsenanordnung 15 nach einer der oben beschriebenen Ausführungsformen aufweisen. Die Primärlinsenanordnung 15 gibt das Licht beispielsweise in einem Winkel β von kleiner oder gleich +/- 35° aus. Hinsichtlich weiterer beispielhafter Ausführungsformen der Lichtquellenanordnung 13 einer Primärlinsenanordnung 15 mit der wird auf das Vorstehende verwiesen.

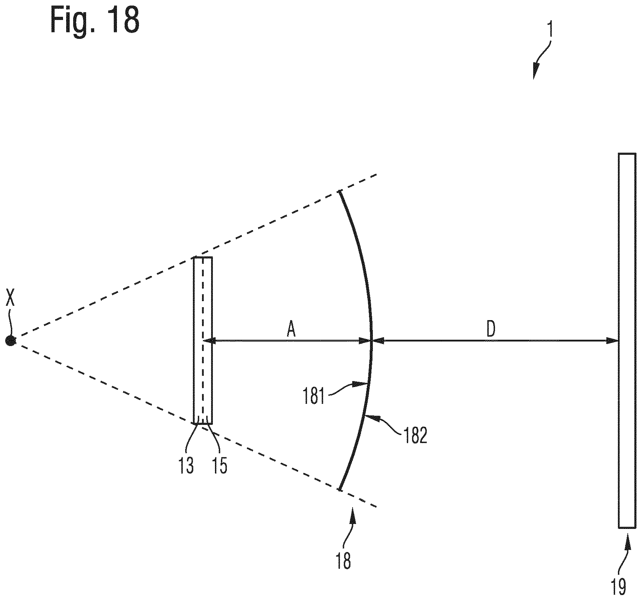

In einem Abstand A von mindestens 40% des Durchmessers des Trägers 139 der Lichtquellenanordnung 13 kann eine Kondensoranordnung 18 vorgesehen sein. Der Abstand kann auch etwa 50% des Durchmessers des Trägers 139 betragen. Beispielsweise weist die Kondensoranordnung 18 eine bezogen auf den Ort der Lichtquellenanordnung 13 konkave Lichteinfallfläche 181 auf. Beispielsweise wird der Abstand A während des Betriebs des Scheinwerfers 1 nicht geändert. Die Kondensoranordnung 18 kann, wie in den Fig. 15 und 17-18 dargestellt, die Form eines Kugelschalenelements aufweisen. Damit weist bei einer Ausführungsform die Kondensoranordnung 18 nicht, wie beispielsweise die Primärlinsenanordnung 15, eine planare Form auf, sondern jene einer Kugelkalotte. In weiterem Abstand D zu der Kondensoranordnung 18 kann eine Fresnellinsenanordnung 19 nachgelagert sein, wie es in Fig. 18 veranschaulicht ist Gemäß einer Ausführungsform ist der Scheinwerfer 1 gemäß den Fig. 15-18 als Fresnelscheinwerfer ausgebildet. Die Fresnellinsenanordnung 19 kann hinsichtlich ihres Abstands D zur Kondensoranordnung 18 beweglich angeordnet sein. Bei einem kurzen Abstand D zur Kondensoranordnung 18 wird der Fresnelscheinwerfer 1 beispielsweise in einer sog. Flood-Einstellung betrieben, und bei einem großen Abstand D zur Kondensoranordnung 18 wird der Fresnelscheinwerfer 1 beispielsweise in einer sog. Spot-Einstellung betrieben.

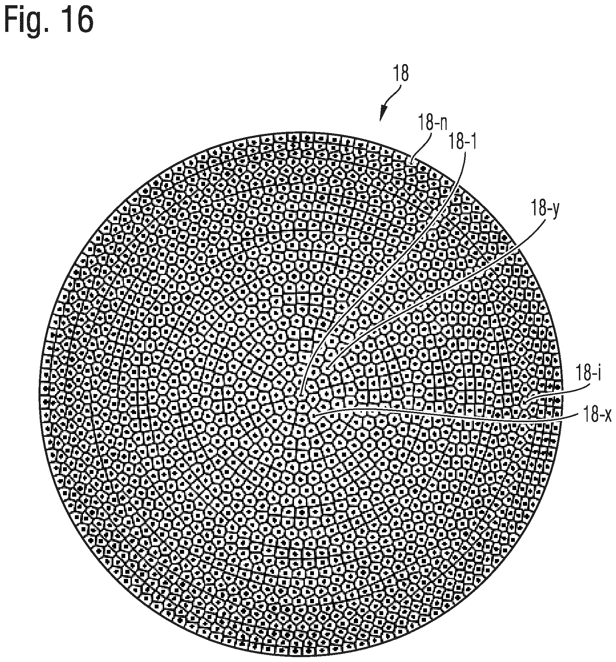

Die Kondensoranordnung 18 kann eine Vielzahl von Mikrolinsen 18-1 bis 18-n aufweisen, die gemäß einem Muster angeordnet sind. Ein beispielhaftes Muster soll anhand der Fig. 16 erläutert werden: danach können die Mikrolinsen 18-1 bis 18-n entlang einer Vielzahl von konzentrischen Kreisen positioniert sein. Dabei kann eine Anzahl von Mikrolinsen pro Kreislinie in radialer Richtung zu nehmen. Ferner können die Mikrolinsen 18-1 bis 18-n jeder Kreislinie in einem gleichen Abstandswinkel voneinander beabstandet sein. Dieser Abstandswinkel kann von Kreislinie zu Kreislinie abnehmen, sodass eine azimutale Dichte der Mikrolinsen 18-1 bis 18-n in radialer Richtung zunimmt. Ferner kann eine Mikrolinse 18-y einer der Kreislinien verglichen zu einer Referenz-Mikrolinse 18-x einer benachbarten Kreislinie um einen Scherwinkel geschert angeordnet sein. Dieser Scherwinkel kann der goldene Winkel (∼137,5°) sein. Dieser Scherwinkel kann für alle benachbarten Kreislinien zutreffen. Ausgehend bspw. von der ersten (innenliegenden) Kreislinie kann hin zur zweiten Kreislinie die Scherung um den goldenen Winkel erfolgen. Von der zweiten Kreislinie hin zur dritten Kreislinie erfolgt wiederum die Scherung um den goldenen Winkel usw. In einem Zentrum der Kondensoranordnung 18 kann eine einzelne Mikrolinse 18-1 angeordnet sein.

In radialer Richtung können die Kreislinien in einem äquidistanten Abstand zueinander angeordnet sein. Bei anderen Ausführungsform kann der Abstand von Kreislinien zu Kreislinien radialer Richtung variieren.

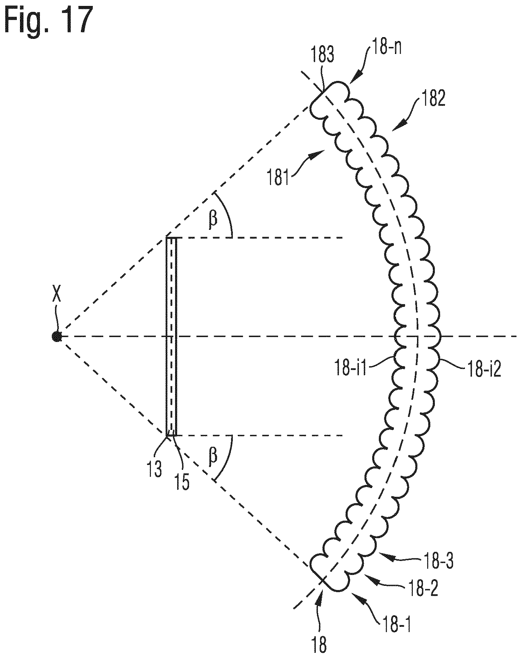

Anhand der Fig. 17 ist verdeutlicht, dass die Mikrolinsen 18-1 bis 18-n jeweils doppelseitig ausgebildet sein können, zum einen also eine jeweilige Eintrittsfläche 18-i1 an der Lichteinfallseite 181 und zum anderen eine jeweilige Austrittsfläche 18-i2 an der Lichtaustrittsseite 182 aufweisen können. Die Eintrittsfläche 18-x1 und die Austrittsfläche 18-x2 können bezogen auf eine Mittellinie 183 der Kondensoranordnung 18 symmetrisch zueinander ausgebildet sein. Die Eintrittsfläche 18-x1 kann durch ein Eintritts-Lenslet gebildet sein, und die Austrittsfläche 18-x2 durch ein Austritts-Lenslet. Bezogen auf die Mittellinie 183 können sowohl die Eintrittsfläche 18-x1 als auch die Austrittsfläche 18-x2 einen konkaven Verlauf aufweisen. Aus anderer Perspektive können die Mikrolinsen 18-1 bis 18-n jeweils eine bi-konvexe Form aufweisen.

Nach einer Ausführungsform sind die Mikrolinsen 18-1 bis 18-n auf einen gemeinsamen Referenzpunkt X ausgerichtet, der dem Träger 139 der Lichtquellenanordnung 13 vorgelagert ist, wie es in der Fig. 17 veranschaulicht ist. Die Kondensatoranordnung 18 kann die Form eines Schalenstücks einer fiktiven Kugel (Kugelkalotte) aufweisen und der Referenzpunkt X kann im Mittelpunkt dieser fiktiven Kugel bilden.

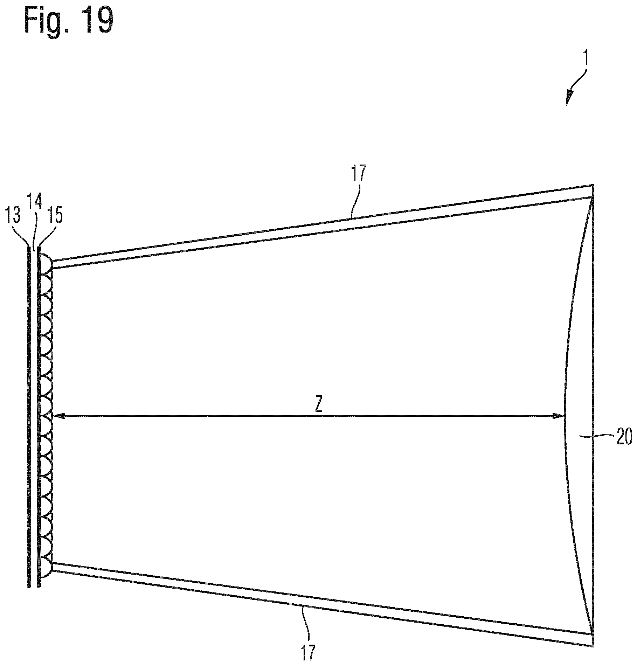

Mit Bezug auf die Fig. 19 bis 26 wird eine weitere Ausführungsform eines Scheinwerfers 1 erläutert. Der dort dargestellte Scheinwerfer 1 kann eine Lichtquellenanordnung 13 mit einer Primärlinsenanordnung 15 nach einer der oben beschriebenen Ausführungsformen aufweisen. Die Primärlinsenanordnung 15 gibt das Licht beispielsweise in einem Öffnungswinkel β von kleiner oder gleich +/- 35° aus. Hinsichtlich weiterer beispielhafter Ausführungsformen der Lichtquellenanordnung 13 einer Primärlinsenanordnung 15 wird auf das Vorstehende verwiesen.

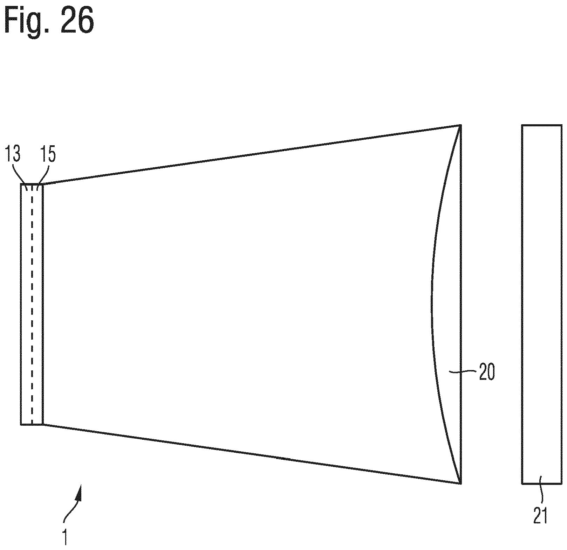

In einem Abstand Z von beispielsweise 60 bis 150 mm zur Primärlinsenanordnung 15 kann eine Feldlinsenanordnung 20 vorgesehen sein. Die Feldlinsenanordnung 20 kann konvex-planar ausgestaltet sein. Außerdem kann die Feldlinsenanordnung 20 aus einem Pressglas gefertigt sein. Beispielsweise leitet eine Lichtmischröhre 17 das von der Primärlinsenanordnung 15 ausgegebene Licht an die Feldlinsenanordnung 20 weiter. Die Lichtmischröhre 17 kann ausgebildet sein, das von der Primärlinsenanordnung 15 ausgegebene Licht zu mischen. Somit können die Primärlinsenanordnung 15 als auch die Feldlinsenanordnung 20 mittels der Lichtmischröhre 17 aneinandergekoppelt sein. Der Feldlinsenanordnung 20 kann ferner eine in der Fig. 26 schematisch dargestellte Projektionsoptik 21 nachgelagert sein. Die Projektionsoptik 21 kann z.B. eine pnp-Linsenordnung aufweisen. Gemäß einer Ausführungsform ist der Scheinwerfer 1 gemäß den Fig. 19-26 als Verfolgerscheinwerfer (auch bekannt als "Ellipsoidal"- oder "Followspot"-Scheinwerfer) ausgebildet.

An dieser Stelle soll betont werden, dass der Scheinwerfer 1 gemäß den Ausführungsformen der Fig. 19 bis 26 die Feldlinsenanordnung 20 nicht notwendigerweise umfassen muss. Nach einer Ausführungsform umfasst der Scheinwerfer 1 die Lichtquellenanordnung 13 mit der Primärlinsenanordnung 15 sowie die daran gekoppelte Lichtmischröhre 17, wie in den Fig. 20 bis 22 veranschaulicht. Die Lichtmischröhre 17 kann das Licht direkt auf das zu beleuchtende Gebiet ausgeben.

Zur Ausbildung bzw. zur Unterstützung der Mischfunktionalität der Lichtmischröhre 17 kann die Lichtmischröhre 17 innenliegende und längst axial verlaufende Vertiefungen 171 aufweisen, wie in der Fig. 25 veranschaulicht ist. Bei anderen Ausführungsform weist die Lichtmischröhre 17 einen mehreckigen Querschnittsverlauf auf, beispielsweise einen hexagonalen, wie in Fig. 24 veranschaulicht. Das in den Innenraum der Lichtmischröhre 17 weisende Material der Lichtmischröhre 17 kann beispielsweise ein Silber umfassen, beispielsweise ein Alanod-Miro-Silver ^{®}.

In den Fig. 20 bis 23 sind weitere Ausführungsformen des Scheinwerfers 1 dargestellt. Nach dem Ausführungsbeispiel gemäß der Fig. 20 ist die Lichtmischröhre 17 im Wesentlichen zylinderförmig ausgebildet. Bei dieser Ausführungsform, bei der eine Feldlinsenanordnung 20 nicht vorgesehen ist, gibt der Scheinwerfer 1 beispielsweise ein telezentrisches Licht aus, wobei sich der Öffnungswinkel des ausgegebenen Lichts kaum oder gar nicht von dem nicht Austrittswinkel an der Primärlinsenanordnung 15 (dort beispielsweise kleiner als +/- 35°) unterscheidet. Nach dem Ausführungsbeispiel gemäß der Fig. 21, bei der eine Feldlinsenanordnung 20 nicht vorgesehen ist, verkleinert sich eine Querschnittsfläche der Lichtmischröhre 17 in Lichtführungsrichtung, sodass hyperzentrisches Licht einem vergrößerten Lichtaustrittswinkel ausgegeben werden kann. Nach dem Ausführungsbeispiel gemäß der Fig. 22, bei der eine Feldlinsenanordnung 20 nicht vorgesehen ist, vergrößert sich die Querschnittsfläche der Lichtmischröhre 17 in Lichtführungsrichtung, sodass homozentrisches mit einem kleineren Lichtaustrittswinkel ausgegeben werden kann. Auch nach dem Ausführungsbeispiel gemäß der Fig. 23 vergrößert sich die Querschnittsfläche der Lichtmischröhre 17 in Lichtführungsrichtung, wobei zusätzlich die Feldlinsenanordnung 20 vorgesehen ist, sodass hyperzentrisches Licht mit einem kleineren Lichtaustrittswinkel ausgegeben werden kann.

Eine oder mehrere der oben beschriebenen Ausführungsformen erlauben die Konstruktion eines kompakten und gewichtsmäßig leichten sowie hinsichtlich der Lichtstärke sowie des Lichtstroms leistungsstarken Scheinwerfers, der darüber hinaus kostengünstig hergestellt werden kann. Die oben beschriebene Lichtquellenanordnung 13 mit der Primärlinsenanordnung 15 kann als Plattform für eine Vielzahl unterschiedlicher Scheinwerfer verwendet werden, wie beispielsweise dem oben beschriebenen Scheinwerfer mit der Vielzahl Lichtleiter, die in einen Reflektorinnenraum ragen, für einen Fresnelscheinwerfer und/oder für einen Verfolgerscheinwerfer.

Räumlich lokale Begriffe, wie beispielsweise "unter", "unterhalb", "niedrig-", "über", "ober-", "vorgelagert", "nachgelagert" und ähnliches, werden zur Beschreibungsvereinfachung verwendet, um die Positionierung der Stelle eines Elements gegenüber einem zweiten Element zu erklären. Diese Begriffe beabsichtigen das Einschließen unterschiedlicher Ausrichtungen der jeweiligen Vorrichtung in Ergänzung zu anderen, als in den Figuren abgebildeten Ausrichtungen. Ferner werden Begriffe, wie beispielsweise "erst-", "zweit-" und ähnliches, auch zur Beschreibung verschiedener Elemente, Regionen, Teilbereiche etc. verwendet und sind ebenso als nicht einschränkend zu verstehen. Ähnliche Begriffe beziehen sich auf ähnliche Elemente die ganze Beschreibung hindurch.

Wie hierin verwendet, sind die Begriffe "habend", "enthaltend", "einschließend", "umfassend", "aufweisend" und ähnliches offene Begriffe, welche das Vorhandensein von angeführten Elementen oder Merkmalen anzeigen, zusätzliche Elemente oder Merkmale jedoch nicht ausschließen. Die Artikel "ein/eine" und "der/die/das" sind dahingehend zu verstehen, dass sie den Plural als auch den Singular umfassen, sofern der Kontext nicht eindeutig etwas anderes anzeigt.

In Anbetracht des obigen Bereichs von Variationen und Anwendungen wird darauf hingewiesen, dass die vorliegende Erfindung nicht durch die vorangegangene Beschreibung eingeschränkt wird, und auch nicht durch die begleitenden Zeichnungen eingeschränkt wird. Die vorliegende Erfindung ist vielmehr lediglich durch die folgenden Ansprüche und deren legale Äquivalente eingeschränkt.

## Patentansprüche

1. Scheinwerfer (1) zur Beleuchtung einer Film-, Studio-, Bühnen-, Event- und/oder Theaterumgebung, umfassend:
- eine Reflektoranordnung (11) mit einer reflektierenden Innenoberfläche (113), die einen Reflektorinnenraum (114) begrenzt;
- eine Anzahl passiver Lichtleiter (12) mit Einspeisestellen (121), die außerhalb des Reflektorinnenraums (114) angeordnet sind, und mit Lichtausgabestellen (122), die innerhalb des Reflektorinnenraums (114) angeordnet sind; und
- eine außerhalb des Reflektorinnenraums (114) angeordnete, elektrisch betriebene Lichtquellenanordnung (13), die einen Träger (139) aufweist, an dessen Frontseite (1391) erste LEDs einer ersten Farbe (1311) und zweite LEDs einer zweiten Farbe (1312) montiert sind, welche jeweils dazu ausgebildet sind, Licht zu erzeugen und es an den Einspeisestellen (121) der passiven Lichtleiter (12) einzuspeisen, **dadurch gekennzeichnet, dass** die Frontseite (1391) ein Strukturmuster aufweist, das aus einer Vielzahl gleich großer und aneinander angrenzender Hexagonalzellen gebildet ist, und jede LED der ersten und zweiten LEDs (131) in einer separaten Hexagonalzelle angeordnet ist.

2. Scheinwerfer (1) nach Anspruch 1, wobei die LEDs oder Teilgruppen davon über eine Anzahl von Strompfaden elektrisch miteinander verbunden sind.

3. Scheinwerfer (1) nach Anspruch 2, wobei die Strompfade ebenfalls an der Frontseite (1391) des Trägers (139) angeordnet sind.

4. Scheinwerfer (1) nach Anspruch 2 oder 3, wobei die Strompfade jeweils einen keilförmigen Verlauf aufweisen, dessen Spitze im Wesentlichen in ein Zentrum der Frontseite (1391) weist.

5. Scheinwerfer (1) nach einem der Ansprüche 1 bis 4, wobei die ersten LEDs (1311) und die zweiten LEDs (1312) bezogen auf einen Mittelpunkt der Frontseite (1391) jeweils symmetrisch verteilt sind.

6. Scheinwerfer (1) nach einem der Ansprüche 1 bis 5, wobei das Strukturmuster mit den Hexagonalzellen die Frontseite (1391) vollständig ausfüllt und jede von wenigstens 90% der Hexagonalzellen mit einer einzigen der LEDs (131) der ersten und zweiten LEDs besetzt ist.

7. Scheinwerfer (1) nach einem der Ansprüche 1 bis 6, wobei jede Hexagonalzelle eine Fläche von weniger als 6 mm² aufweist.

8. Scheinwerfer (1) nach einem der Ansprüche 1 bis 7, wobei ein geometrischer Mittelpunkt der Verteilung der ersten LEDs (1311) und ein geometrischer Mittelpunkt der Verteilung der zweiten LEDs (1312) mit dem Mittelpunkt der Frontseite (1391) zusammenfallen.

9. Scheinwerfer (1) nach einem der Ansprüche 1 bis 8, wobei der Träger (139) ein Single-Layer-PCB umfasst, das ausgebildet ist, jeder LED der ersten und zweiten LEDs elektrischen Strom zuzuführen.

10. Scheinwerfer (1) nach einem der Ansprüche 1 bis 9, wobei
- für die ersten LEDs (1311) im Träger (139) wenigstens ein erster Strompfad vorgesehen ist;
- für die zweiten LEDs (1312) im Träger (139) wenigstens ein zweiter Strompfad vorgesehen ist; und
- der wenigstens eine erste Strompfad und der wenigstens eine zweite Strompfad sich in keiner Ebene des Trägers (139) kreuzen.

11. Scheinwerfer (1) nach einem der Ansprüche 1 bis 10, weiter umfassend:
- eine an den Träger (139) gekoppelte Flüssigkeitskühlung (135), die ausgebildet ist, eine von den LEDs (131) der ersten und zweiten LEDs produzierte Verlustwärme abzuführen.

12. Scheinwerfer (1) nach Anspruch 11, wobei die Flüssigkeitskühlung (135) aufweist:
- eine Zuleitung (1351), die Flüssigkeit zu einer zentralen Stelle einer Rückseite (1392) des Trägers (139) hinführt; und
- eine Ableitung (1352), die Flüssigkeit von der zentralen Stelle in Richtung eines Randgebiets (1393) des Trägers (139) abführt.

13. Scheinwerfer (1) nach einem der Ansprüche 1 bis 12, weiter umfassend:
- eine Primärlinsenanordnung (15), die in einem Abstand (d) zwischen 50 µm und 1 mm zu den LEDs (131) der ersten und zweiten LEDs positioniert ist, und die für jede der LEDs (131) der ersten und zweiten LEDs wenigstens ein Linsenelement (151) umfasst.

14. Scheinwerfer (1) nach Anspruch 13, wobei die Primärlinsenanordnung (15) dazu ausgebildet ist, mindestens 70% des von den ersten und zweiten LEDs (131) erzeugten Lichts in einem Lichtkegel mit einem Öffnungswinkel (β) von kleiner als 35° auszugeben.

15. Scheinwerfer (1) nach Anspruch 13 oder 14, wobei die Linsenelemente (151) auf einer der Frontseite (1391) des Trägers (139) abgewandten Frontseite (1591) eines Trägers (159) der Primärlinsenanordnung (15) montiert sind, und wobei
- die Frontseite (1591) der Stütze (159) ein Strukturmuster aufweist, das aus einer Vielzahl gleich großer und einander angrenzenden Hexagonalzellen gebildet ist;
- jedes der Linsenelemente (151) in einer separaten Hexagonalzelle angeordnet ist.

## Claims

1. Spotlight (1) for lighting a film, studio, stage, event and/or theatre environment, comprising:
- a reflector arrangement (11) with a reflecting inner surface (113), which delimits a reflector interior (114);
- a number of passive light guides (12) with feed points (121), which are arranged outside of the reflector interior (114), and with light output points (122), which are arranged inside the reflector interior (114); and
- an electrically operated light source arrangement (13) which is arranged outside of the reflector interior (114) and has a support (139), on the front (1391) of which first LEDs of a first colour (1311) and second LEDs of a second colour (1312) are mounted, which are respectively designed to produce light and feed it to the feed points (121) of the passive light guides (12),
**characterised in that** the front (1391) has a structural pattern formed from a plurality of adjacent hexagonal cells of similar size, and each LED of the first and second LEDs (131) is arranged in a separate hexagonal cell.

2. Spotlight (1) according to claim 1, wherein the LEDs or sub-groups thereof are electrically connected to one another via a number of current paths.

3. Spotlight (1) according to claim 2, wherein the current paths are also arranged on the front (1391) of the support (139) .

4. Spotlight (1) according to claim 2 or 3, wherein the current paths respectively have a wedge-shaped course, the tip of which points substantially to a centre of the front (1391).

5. Spotlight (1) according to one of claims 1 to 4, wherein the first LEDs (1311) and the second LEDs (1312) are respectively symmetrically distributed relative to a centre point of the front (1391).

6. Spotlight (1) according to one of claims 1 to 5, wherein the structural pattern with the hexagonal cells completely fills the front (1391) and each of at least 90% of the hexagonal cells is occupied by a single one of the LEDs (131) of the first and second LEDs.

7. Spotlight (1) according to one of claims 1 to 6, wherein each hexagon cell has a surface area of less than 6 mm².

8. Spotlight (1) according to one of claims 1 to 7, wherein a geometric centre point of the distribution of the first LEDs (1311) and a geometric centre point of the distribution of the second LEDs (1312) coincide with the centre point of the front (1391).

9. Spotlight (1) according to one of claims 1 to 8, wherein the support (139) comprises a single-layer PCB, which is designed to supply electric current to each LED of the first and second LEDs.

10. Spotlight (1) according to one of claims 1 to 9, wherein
- at least one first current path is provided for the first LEDs (1311) in the support (139);
- one second current path is provided for the second LEDs (1312) in the support (139); and
- the at least one first current path and the at least one second current path do not cross at any plane of the support (139).

11. Spotlight (1) according to one of claims 1 to 10, further comprising:
- a liquid cooling system (135), which is coupled to the support (139) and designed to dissipate a heat loss produced by the LEDs (131) of the first and second LEDs.

12. Spotlight (1) according to claim 11, wherein the liquid cooling system (135) has:
- a supply line (1351), which leads liquid to a central point of a rear side (1392) of the support (139); and
- a drain (1352), which drains liquid from the central point towards a peripheral area (1393) of the support (139).

13. Spotlight (1) according to one of claims 1 to 12, further comprising:
- a primary lens arrangement (15), which is positioned at a distance (d) of between 50 µm and 1mm from the LEDs (131) of the first and second LEDs, and which comprises at least one lens element (151) for each of the LEDs (131) of the first and second LEDs.

14. Spotlight (1) according to claim 13, wherein the primary lens arrangement (15) is designed to emit at least 70% of the light produced by the first and second LEDs (131) in a light cone with a beam angle (β) smaller than 35°.

15. Spotlight (1) according to claim 13 or 14, wherein the lens elements (151) are mounted on a front (1591) of a support (159) of the primary lens arrangement (15) facing away from the front (1391) of the support (139), and wherein
- the front (1591) of the support (159) has a structural pattern formed from a plurality of adjacent hexagonal cells of similar size;
- each of the lens elements (151) is arranged in a separate hexagonal cell.

## Revendications

1. Projecteur (1) pour éclairer un environnement de film, de studio, de scène, d'événement et/ou de théâtre, comprenant :
- un agencement de réflecteur (11) avec une surface intérieure réfléchissante (113) qui délimite un espace intérieur de réflecteur (114) ;
- un certain nombre de guides de lumière passifs (12) avec des points d'alimentation (121) disposés à l'extérieur de l'espace intérieur de réflecteur (114) et avec des points de sortie de lumière (122) disposés à l'intérieur de l'espace intérieur de réflecteur (114) ; et
- un agencement de sources de lumière (13) alimenté électriquement, disposé à l'extérieur de l'espace intérieur de réflecteur (114), présentant un support (139) sur la face avant (1391) duquel sont montées des premières LED d'une première couleur (1311) et des deuxièmes LED d'une deuxième couleur (1312), lesquelles sont chacune conçues pour générer de la lumière et l'alimenter aux points d'alimentation (121) des guides de lumière passifs (12),
**caractérisé en ce que**
la face avant (1391) présente un motif structuré formé d'une pluralité de cellules hexagonales de taille égale et adjacentes les unes aux autres, et chaque LED des premières et deuxièmes LED (131) est disposée dans une cellule hexagonale séparée.

2. Projecteur (1) selon la revendication 1, dans lequel les LED ou des sous-groupes de LED sont reliés électriquement entre eux par un certain nombre de trajets de courant.

3. Projecteur (1) selon la revendication 2, dans lequel les trajets de courant sont également disposés sur la face avant (1391) du support (139).

4. Projecteur (1) selon la revendication 2 ou 3, dans lequel les trajets de courant présentent chacun un tracé en forme de coin dont le sommet est orienté sensiblement vers un centre de la face avant (1391).

5. Projecteur (1) selon l'une des revendications 1 à 4, dans lequel les premières LED (1311) et les deuxièmes LED (1312) sont réparties respectivement de manière symétrique par rapport à un centre de la face avant (1391).

6. Projecteur (1) selon l'une des revendications 1 à 5, dans lequel le motif structuré à cellules hexagonales remplit entièrement la face avant (1391) et chacune d'au moins 90 % des cellules hexagonales est occupée par une seule des LED (131) des premières et deuxièmes LED.

7. Projecteur (1) selon l'une des revendications 1 à 6, dans lequel chaque cellule hexagonale présente une surface inférieure à 6 mm².

8. Projecteur (1) selon l'une des revendications 1 à 7, dans lequel un centre géométrique de la répartition des premières LED (1311) et un centre géométrique de la répartition des deuxièmes LED (1312) coïncident avec le centre de la face avant (1391).

9. Projecteur (1) selon l'une des revendications 1 à 8, dans lequel le support (139) comprend une carte à circuit imprimé monocouche conçue pour amener un courant électrique à chaque LED des premières et deuxièmes LED.

10. Projecteur (1) selon l'une des revendications 1 à 9, dans lequel
- pour les premières LED (1311), au moins un premier trajet de courant est prévu dans le support (139) ;
- pour les deuxièmes LED (1312), au moins un deuxième trajet de courant est prévu dans le support (139) ; et
- ledit au moins un premier trajet de courant et ledit au moins un deuxième trajet de courant ne se croisent dans aucun plan du support (139).

11. Projecteur (1) selon l'une des revendications 1 à 10, comprenant en outre :
- un système de refroidissement par liquide (135) couplé au support (139) et conçu pour évacuer une chaleur dissipée produite par les LED (131) des premières et deuxièmes LED.

12. Projecteur (1) selon la revendication 11, dans lequel le refroidissement par liquide (135) comprend :
- une conduite d'alimentation (1351) qui amène le liquide vers un emplacement central d'une face arrière (1392) du support (139) ; et
- une conduite d'évacuation (1352) qui évacue le liquide de l'emplacement central vers une zone périphérique (1393) du support (139).

13. Projecteur (1) selon l'une des revendications 1 à 12, comprenant en outre :
- un agencement de lentilles primaires (15) positionné à une distance (d) comprise entre 50 µm et 1 mm des LED (131) des premières et deuxièmes LED, et comprenant au moins un élément de lentille (151) pour chacune des LED (131) des premières et deuxièmes LED.

14. Projecteur (1) selon la revendication 13, dans lequel l'agencement de lentilles primaires (15) est conçu pour émettre au moins 70 % de la lumière générée par les premières et deuxièmes LED (131) dans un cône de lumière ayant un angle d'ouverture (β) inférieur à 35°.

15. Projecteur (1) selon la revendication 13 ou 14, dans lequel les éléments de lentille (151) sont montés sur une face avant (1591) d'un support (159) de l'agencement de lentilles primaires (15) opposée à la face avant (1391) du support (139), et dans lequel
- la face avant (1591) du support (159) présente un motif structuré formé d'une pluralité de cellules hexagonales de taille égale et adjacentes les unes aux autres ;
- chacun des éléments de lentille (151) est disposé dans une cellule hexagonale séparée.
